Europäisches Patentamt

European Patent Office

Office européen des brevets

(19)

(11) Numéro de publication: **0 090 902**
**B1**

# (12) FASCICULE DE BREVET EUROPEEN

(45) Date de publication du fascicule du brevet:
**28.10.87**

(51) Int. Cl.⁴: **F 24 J 2/16**

(21) Numéro de dépôt: **82402281.8**

(22) Date de dépôt: **14.12.82**

(54) **Insolateur vertical à concentration de flux bi-directionnelle.**

(30) Priorité: **14.12.81 FR 8123293**

(43) Date de publication de la demande:
**12.10.83 Bulletin 83/41**

(45) Mention de la délivrance du brevet:
**28.10.87 Bulletin 87/44**

(84) Etats contractants désignés:
**AT BE CH DE GB IT LI LU NL SE**

(56) Documents cités:
**EP - A - 0 055 337**
**DE - A - 3 026 800**
**GB - A - 2 018 976**
**US - A - 4 003 366**

(73) Titulaire: **Ladriere, Serge Léon Arthur, Villa Khalouatna Avenue du Cap Roux, F-06360 Eze sur Mer (FR)**

(72) Inventeur: **Ladriere, Serge Léon Arthur, Villa Khalouatna Avenue du Cap Roux, F-06360 Eze sur Mer (FR)**

(74) Mandataire: **Jacquelin, Marc-Henri et al, Cabinet PLASSERAUD 84, rue d'Amsterdam, F-75009 Paris (FR)**

ACTORUM AG

## Description

La présente invention concerne les appareils du type capteur solaire; plus exactement elle concerne un insolateur permettant d'échauffer des fluides avec le flux solaire, pour obtenir des calories utilisables immédiatement ou transportées dans un réservoir de stockage au moyen d'un échangeur pour un usage ultérieur.

Dans les dispositifs connus de ce genre, une plaque généralement métallique sur laquelle sont aménagées des tuyauteries dites passages du fluide caloporteur – l'ensemble formant l'absorbeur teinté de couleur noire – reçoit le flux solaire. L'absorbeur est logé dans un coffre calorifugé et une vitre transparente au rayonnement solaire ferme ce coffre. L'absorbeur reçoit le flux solaire à travers la vitre et s'échauffe; la vitre ne laissant pas passer les infra-rouges et le coffre étant calorifugé, les infra-rouges produits par l'échauffement de l'absorbeur ne peuvent pas s'échapper et il y a disponibilité de calories sur l'absorbeur; le fluide caloporteur traversant l'absorbeur par échange thermique véhicule les calories ainsi prélevées jusqu'au point d'utilisation ou de stockage.

Dans de tels dispositifs, les absorbeurs sont disposés avec un angle d'inclinaison fixe. Or, il est connu que le rayonnement solaire incident parvient sous un angle variable par rapport à un point fixe situé entre les deux solstices: solstice d'été, équinoxe, solstice d'hiver. De tels dispositifs ont des rendements insuffisants du fait de leur agencement avec inclinaison fixe. De plus, des pertes importantes de calories sont dues à la réflexion du flux solaire sur l'absorbeur et enfin la face arrière de l'absorbeur, n'étant pas soumise au flux solaire direct ou indirect ou par réflexion, ne peut pas s'échauffer.

Le brevet US-A-4 003 366 décrit certes un insolateur vertical à concentration de flux comportant plusieurs absorbeurs tubulaires, des passages pour un fluide caloporteur, et un réflecteur de flux. Bien qu'étant d'un type différent du type commun mentionné plus haut, cet insolateur vertical connu en conserve cependant les inconvénients essentiels dans la mesure où sa conception ne tient pas compte de l'inclinaison variable du flux solaire entre les solstices d'été et d'hiver.

De même, il est connu, de par la demande de brevet GB-A-2 018 976, un réflecteur solaire ayant une section transversale en zig-zag. Cependant, il n'est pas indiqué, ni suggéré dans ce document de conformer un tel réflecteur spécifiquement pour tenir compte de l'inclinaison variable du flux solaire et pour qu'il capte en permanence un maximum du rayonnement solaire.

L'insolateur selon l'invention vise à éviter ces inconvénients.

A cette fin, l'invention propose un insolateur vertical à concentration de flux comportant au moins deux absorbeurs tubulaires agencés pour le passage d'un fluide caloporteur et un réflecteur de flux, caractérisé en ce que chaque absorbeur tubulaire à parois absorbantes comporte deux faces angulaires longitudinales sensiblement diamétralement opposées, chaque face angulaire présentant une section transversale sensiblement en V à pointe tournée vers l'axe de l'absorbeur dont les deux ailes du V forment un angle correspondant sensiblement à l'angle entre le solstice d'été et le solstice d'hiver à l'endroit de l'utilisation de l'insolateur, les absorbeurs tubulaires étant, en position d'utilisation, disposés horizontalement les uns au-dessus des autres avec une face angulaire ouverte en direction du soleil et ses parois dirigées respectivement en direction du solstice d'été et du solstice d'hiver, et le réflecteur de flux, situé en arrière des absorbeurs tubulaires, est constitué de plusieurs panneaux réfléchissants disposés les uns au-dessus des autres en présentant, en section transversale, une configuration en zig-zag formant autant de dièdres saillants qu'il y a d'absorbeurs, chaque dièdre saillant étant en outre pointé vers un absorbeur correspondant de manière telle que le plan bissecteur des parois du dièdre saillant passe par l'axe central de l'absorbeur correspondant, lequel plan bissecteur est symétrique, par rapport à un plan vertical, du plan bissecteur de la face angulaire tournée vers le soleil. Grâce à cet agencement, tous les rayons du soleil pénétrant dans l'insolateur sont dirigés, soit directement, soit après réflexion sur le réflecteur, sur les parois absorbantes des concentrateurs des absorbeurs tubulaires, et ce, quelle que soit la saison et donc la hauteur du soleil.

Dans un mode de réalisation particulier, les absorbeurs tubulaires ont une section transversale de forme générale circulaire.

Avantageusement, les axes de deux absorbeurs tubulaires successifs sont écartés l'un de l'autre d'environ trois fois le rayon d'un absorbeur.

De préférence, le sommet de chaque dièdre saillant du réflecteur est situé à une distance du centre de l'absorbeur tubulaire qui lui est associé égale à environ deux fois le rayon dudit absorbeur.

Dans un exemple de réalisation spécifique, chaque concentrateur angulaire a une ouverture d'environ 46°54', et son plan bissecteur est incliné d'environ 60° par rapport à la verticale.

D'autres particularités et avantages de l'invention apparaîtront à la lecture de la description qui suit donnée à titre non limitatif, et dans laquelle on se réfère aux dessins annexés sur lesquels:

la figure 1 est une représentation géométrique des absorbeurs et du réflecteur d'un insolateur solaire agencé selon l'invention.

La figure 2 est un absorbeur tubulaire à concentration de flux solaire.

La figure 3 représente une vue de coupe d'un insolateur vertical selon l'invention.

La description qui va suivre se rapporte à un insolateur vertical à concentration de flux bi-directionnelle.

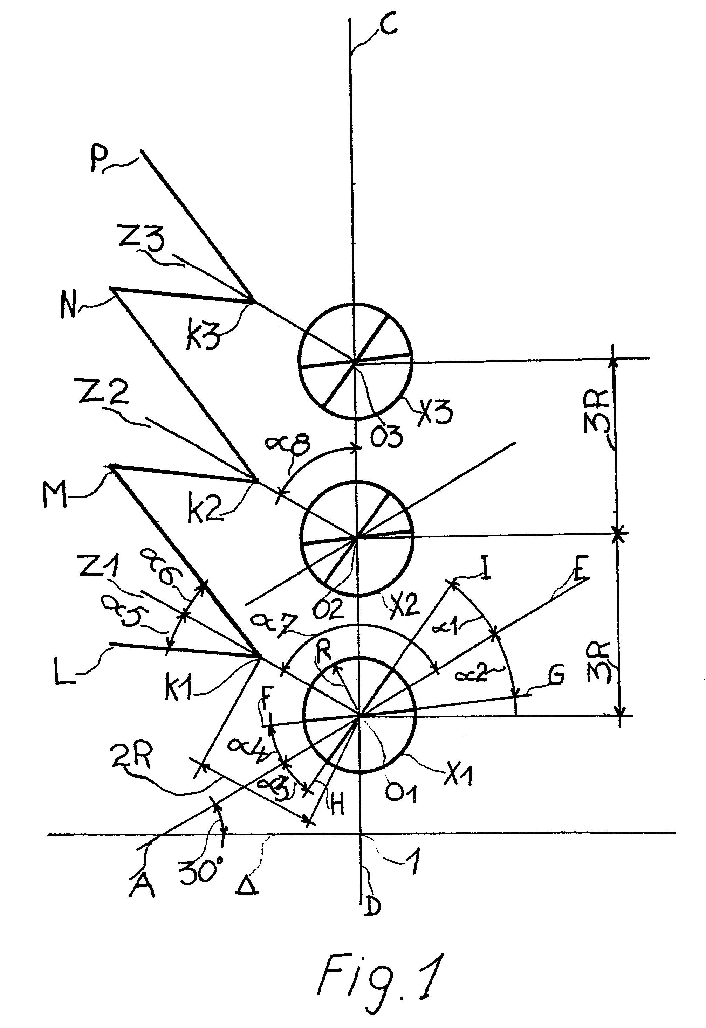

La figure 1 est une figure géométrique expliquant des bases de calcul pour la réalisation d'un tel insolateur.

Comme on le voit à l'examen de cette figure, on trace une droite horizontale Δ, on trace à 90° de Δ en 1 une droite DC. Au point $O_1$ sur DC on trace un cercle $X_1$ de rayon R. On trace une droite AE qui passe par $O_1$ à 30° de Δ. On trace une droite FG qui passe par $O_1$ à α2 = 23°27' de la droite AE. On trace une droite HI qui passe par $O_1$ à α1 = 23°27' de AE. Le point E matérialise la position du soleil à l'équinoxe, le point I détermine la position du solei au solstice d'été. Le point G détermine la position du soleil au solstice d'hiver. Les angles α1 et α2 α3 α4 déterminent la variation angulaire du soleil par rapport à la droite CD.

Sur la droite CD on trace un deuxième cercle $X_2$ de rayon R égal à R de $X_1$ et ayant pour centre $O_2$ à une distance $O_1 O_2$ égale à 3 fois le rayon R du cercle $X_1$, on trace sur la droite CD un troisième cercle $X_3$ ayant pour centre $O_3$ à une distance $O_2 O_3$ égale à 3 fois le rayon R de $X_2$. Le nombre de cercles $X_1 X_2 X_3$ n'est pas limitatif. On a déterminé une distance entre les centres $O_1 O_2 O_3$ égale à 3 fois le rayon R.

A partir du centre $O_1$ on trace à 120° α7 de AE une droite $O_1 Z_1$. A partir du centre $O_1$ sur la droite $O_1 Z_1$ on trace le point $K_1$ à une distance égale à 2 fois le rayon R. A partir du point $K_1$ on trace une droite $K_1$ L à 23°27' α5 de $K_1 Z_1$, on trace une droite $K_1$ M à 23°27' α6 de $K_1 Z_1$. Il a été déterminé des angles α5 α6 égaux à α3 α4 égaux à α1 α2 = 23°27'.

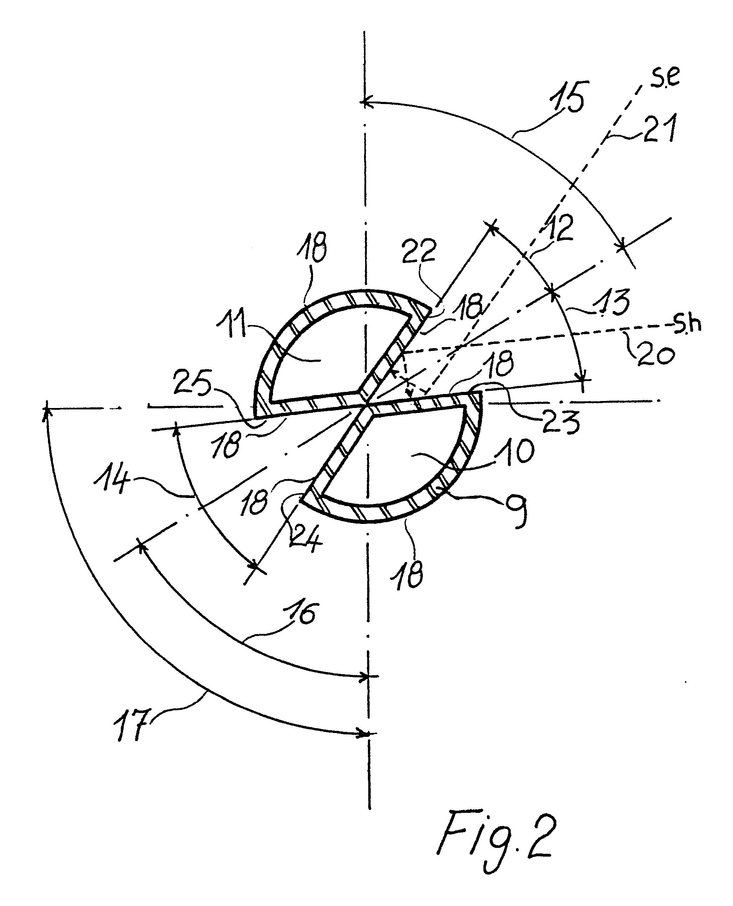

$O_2 Z_2$ passant par $O_2$ est parallèle à $O_1 Z_1$. $O_3 Z_3$ passant par $O_3$ est parallèle à $O_2 Z_2$. Les distances $K_2 O_2$ et $K_3 O_3$ et $K_1 O_1$ sont égales. Les droites $Z_1 O_1 Z_2 O_2$ et $Z_3 O_3$ ont un angle de α8 de 60° par rapport à la droite CD. La constitution géométrique L $K_1$ M $K_2$ N $K_3$ P permet la réalisation d'un réflecteur angulaire selon l'invention. La figure 2 est un absorbeur tubulaire à concentration de flux solaire représenté également par le dessin géométrique de la figure 1 par $X_1 X_2 X_3$.

Comme on le voit à l'examen de la figure 2 l'absorbeur tubulaire 9 est représenté en vue de coupe, il est conçu avec ses passages de fluides caloporteurs 10–11 et ses concentrateurs de flux solaire 12 - égale à 23°27' et 13 égale à 23°27' soit un angle total 12–13 de 46°54'. Le concentrateur de flux solaire 14 a automatiquement 46°54' d'angle d'ouverture. 15 représente l'inclinaison à 60° de l'axe des concentrateurs par rapport à l'axe vertical 19. 16 représente l'inclinaison à 60° de l'axe des concentrateurs par rapport à l'axe vertical 19.

17 représente l'axe horizontal à 90° de l'axe 19. 18 représente les faces de l'absorbeur qui ont reçu un traitement sélectif soit électrochimique ou par peinture sélective, afin d'avoir une absorptivité maximum du flux solaire, une réflectivité minimum du flux solaire et une émissivité minimum.

Le trait en pointillé 20 matérialise le flux solaire au solstice d'hiver du soleil Sh. Le flux solaire 20 est absorbé par la face angulaire 22. Les traitements sélectifs ne sont pas parfaits et une partie du flux solaire 20 sera réfléchie sur la face angulaire 23, ce qui permet d'augmenter l'absorptivité, donc le rendement. Il en est de même pour l'émissivité de la face angulaire 22, qui peut être absorbée par la face angulaire 23.

Le trait en pointillé 21 matérialise le flux solaire au solstice d'été du soleil Se. La face angulaire 23 absorbe le flux solaire 21, la partie de flux solaire qui ne sera pas absorbée par la face angulaire 23 sera réfléchie sur la face angulaire 22 et absorbée.

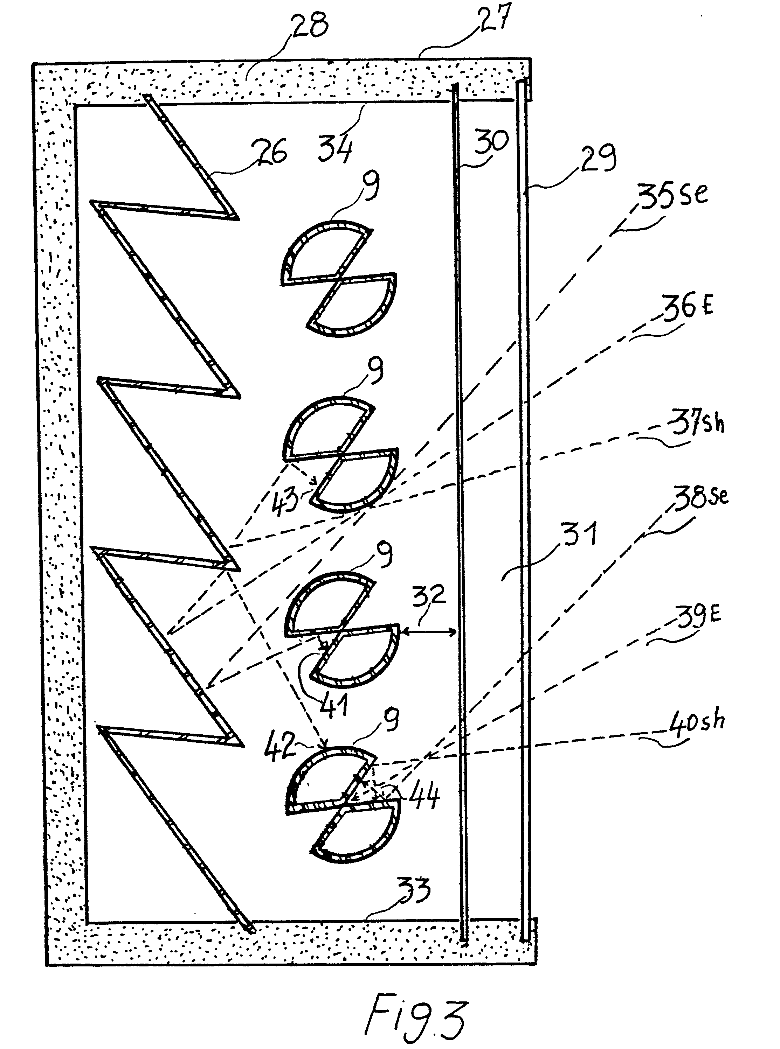

L'émissivité de la face 23 sera également absorbée sur la face 22. Il a été démontré que, entre le solstice d'été Se et le solstice d'hiver Sh, le flux solaire était mieux absorbé selon l'invention. Les faces angulaires 24–25 reçoivent également le flux solaire, mais par réflexion comme il le sera démontré avec la figure 3.

Indépendamment de la concentration du flux solaire, l'absorbeur 9 reçoit sur toute sa surface sélective 18 le flux direct ou indirect ou par réflexion du flux solaire.

La figure 3 est une vue en coupe de l'insolateur selon l'invention. Elle indique clairement la disposition du réflecteur angulaire 26 et des absorbeurs tubulaires 9 aménagés dans un coffre 27 calorifugé 28, une vitre de projection 29 referme l'ensemble, une deuxième vitre 30 limite les déperditions calorifiques. L'espace 31 a une largeur égale au rayon R (fig. 1) de l'absorbeur 9. La distance 32 est égale au rayon R (Fig. 1) de l'absorbeur 9. Les parois intérieures 33–34 du coffre 27 sont réfléchissantes, le nombre d'absorbeurs 9 n'est pas limitatif et est donné à titre d'exemple. Le trait en pointillé 35 Se matérialise un rayon du flux solaire au solstice d'été du soleil, le rayon 35 Se est réfléchi par le réflecteur angulaire 26 sur l'absorbeur 9 au point 41. Le trait en pointillé 36 E matérialise un rayon du flux solaire à l'équinoxe du soleil, le rayon 36 E est réfléchi par le réflecteur angulaire 26 sur l'absorbeur 9 au point 42. Le trait en pointillé 37 Sh matérialise un rayon du flux solaire au solstice d'hiver du soleil, le rayon 37 Sh est réfléchi par le réflecteur 26 sur l'absorbeur 9 au point 43. Les absorbeurs 9 reçoivent complètement le flux solaire par réflexion et l'absorbent. Les traits en pointillé 38 Se – 39E – 40 Sh matérialisent comme précédemment des rayons du flux solaire au solstice d'été du soleil 38 Se, à l'équinoxe du soleil 39 E, au solstice d'hiver du soleil 40 Sh. L'absorbeur 9 reçoit complètement le flux solaire direct et par concentration au point 44.

L'insolateur vertical à concentration de flux bidirectionnelle selon l'invention reçoit sur ses absorbeurs 9 le flux direct du soleil, le flux solaire par concentration, le flux solaire par réflexion.

Le dispositif objet de l'invention peut-être utilisé avec tous les fluides caloporteurs, être raccordé à tous les systèmes de stockage de calories. Des applications particulièrement intéressantes peuvent être: le chauffage des habitations, maisons individuelles, immeubles, tous locaux, pour le chauffage de l'eau sanitaire, des piscines, des serres. Son utilisation en position verticale offre des avantages: la pose facile du dispositif en façade des maisons et des bâtiments, sous les gouttières, sur les terrasses, sur les balcons.

La position verticale a l'avantage de ne pas laisser persister la pluie, la neige, sur la vitre de protection 29.

**Revendications**

1. Insolateur vertical à concentration de flux comportant au moins deux absorbeurs tubulaires agencés pour le passage d'un fluide caloporteur et un réflecteur de flux, caractérisé:

– en ce que chaque absorbeur tubulaire (9) à parois absorbantes comporte deux faces angulaires (22, 23; 24, 25) longitudinales sensiblement diamétralement opposées, chaque face angulaire présentant une section transversale sensiblement en V à pointe tournée vers l'axe de l'absorbeur (9) dont les deux ailes du V forment un angle (12, 13) correspondant sensiblement à l'angle entre le solstice d'été et le solstice d'hiver à l'endroit de l'utilisation de l'insolateur, les absorbeurs tubulaires (9) étant, en position d'utilisation, disposés horizontalement les uns au-dessus des autres avec une face angulaire (22, 23) ouverte en direction du soleil et ses parois dirigées respectivement en direction du solstice d'été et du solstice d'hiver,

– et en ce que le réflecteur de flux (26), situé en arrière des absorbeurs tubulaires (9), est constitué de plusieurs panneaux réfléchissants disposés les uns au-dessus des autres en présentant, en section transversale, une configuration en zig-zag formant autant de dièdres saillants ($K_1$, $K_2$, $K_3$) qu'il y a d'absorbeurs, chaque dièdre saillant étant en outre pointé vers un absorbeur (9) correspondant de manière telle que le plan bissecteur ($Z_1$, $Z_2$, $Z_3$) des parois du dièdre saillant passe par l'axe central ($O_1$, $O_2$, $O_3$) de l'absorbeur correspondant, lequel plan bissecteur ($Z_1$, $Z_2$, $Z_3$) est symétrique, par rapport à un plan vertical (C), du plan bissecteur (E) de la face angulaire tournée vers le soleil.

2. Insolateur selon la revendication 1, caractérisé en ce que les absorbeurs tubulaires (9) ont une section transversale de forme générale circulaire.

3. Insolateur selon la revendication 2, caractérisé en ce que les axes de deux absorbeurs tubulaires (9) successifs sont écartés l'un de l'autre d'environ trois fois le rayon R d'un absorbeur.

4. Insolateur selon l'une quelconque des revendications 1 à 3, caractérisé en ce que le sommet de chaque dièdre saillant du réflecteur est situé à une distance du centre de l'absorbeur tubulaire (9) qui lui est associé égale à environ deux fois le rayon dudit absorbeur.

5. Insolateur selon l'une quelconque des revendications 1 à 4, caractérisé en ce que chaque face angulaire a une ouverture de 46°54′ et en ce que son plan bissecteur est incliné de 60° par rapport à la verticale.

**Claims**

1. Vertical insolator with flux concentration comprising at least two tubular absorbers arranged for the passage of a heat transfer fluid and a flux reflector, characterized in that each tubular absorber (9) with absorbing walls comprises two substantially diametrically opposite, longitudinal angular faces (22, 23; 24, 25), each of which has a substantially V-shaped cross-section with its point directed towards the axis of the absorber (9), whereof the two sides of the V form an angle (12, 13) substantially corresponding to the angle between the summer solstice and the winter solstice at the point of use of the insolator, the tubular absorbers (9), in the use position, being arranged in horizontally superimposed manner with an angular face (22, 23) open in the direction of the sun and its walls respectively directed in the direction of the summer solstice and the winter solstice and in that the flux reflector (26) located behind the tubular absorbers (9) is constituted by a plurality of superimposed reflecting panels having, in cross-section, a zig-zag configuration forming the same number of projecting dihedrons ($K_1$, $K_2$, $K_3$) as there are absorbers, each projecting dihedron also being pointed towards a corresponding absorber (9), in such a way that the bisecting planes ($Z_1$, $Z_2$, $Z_3$) of the walls of the projecting dihedron pass through the central axis ($O_1$, $O_2$, $O_3$) of the corresponding absorber, said bisecting plane ($Z_1$, $Z_2$, $Z_3$) being symmetrical, with respect to a vertical plane (C), to the bisecting plane (E) of the angular face turned towards the sun.

2. Insolator according to claim 1, characterized in that the tubular absorbers (9) have a generally circular cross-section.

3. Insolator according to claim 2, characterized in that the axes of two successive tubular absorbers (9) are spaced from one another by approximately three times the radius (R) of an absorber.

4. Insolator according to any one of the claims 1 to 3, characterized in that the apex of each projecting dihedron of the reflector is located at a distance from the centre of the tubular absorber (9) associated therewith equal to approximately twice the radius of said absorber.

5. Insolator according to any one of the claims 1 to 4, characterized in that each angular face has an aperture of 46°54′ and in that its bisecting plane is inclined by 60° with respect to the vertical.

**Patentansprüche**

1. Vertikaler Sonnenkollektor mit Strahlungskonzentration, mit zumindest zwei rohrförmigen Absorbern, die für den Durchfluss eines Wärmeträgerfluids ausgebildet sind, und einem Strahlungsreflektor, dadurch gekennzeichnet:

– dass jeder rohrförmige Absorber (9) mit Absorberwänden zwei winkelförmige Längsseiten (22, 23; 24, 25) aufweist, die einander im wesentlichen diametral gegenüberliegen, wobei jede winkelförmige Seite einen im wesentlichen V-förmigen Querschnitt aufweist, dessen Spitze der Achse des Absorbers zugekehrt ist, und die beiden Schenkel des V einen Winkel einschliessen, der im wesentlichen dem Winkel zwischen Sommer- und Wintersonnenwende am Anwendungsort des Kollektors entspricht, wobei die rohrförmigen Absorber in der Gebrauchsstellung horizontal übereinander mit einer in Richtung der Sonne offenen winkelförmigen Seite und der Sommer- und Wintersonnenwende im wesentlichen zugekehrten Wänden angeordnet sind,

– und dass der Strahlungsreflektor (26), der hinter den rohrförmigen Absorbern (9) liegt, aus mehreren reflektierenden Platten besteht, die übereinander liegen und im Querschnitt eine Zickzackformation von vorspringenden Diedern bilden $(K_1, K_2, K_3)$, wobei so viele Dieder wie Absorber vorhanden sind und jeder Dieder dem Absorber (9) derart zugekehrt ist, dass die Halbierungsebene $(Z_1, Z_2, Z_3)$ der Wände des Dieders die zentrale Achse $(O_1, O_2, O_3)$ des zugeordneten Absorbers durchsetzt, wobei diese Halbierungsebene $(Z_1, Z_2, Z_3)$ bezüglich einer Vertikalebene (C) symmetrisch zur Halbierungsebene (E) der der Sonne zugekehrten winkelförmigen Seite ist.

2. Sonnenkollektor nach Anspruch 1, dadurch gekennzeichnet, dass die rohrförmigen Absorber (9) einen im wesentlichen kreisförmigen Querschnitt haben.

3. Sonnenkollektor nach Anspruch 2, dadurch gekennzeichnet, dass die Achsen zwei aufeinanderfolgender rohrförmiger Absorber (9) einen gegenseitigen Abstand von etwa dem 3 fachen des Radius (R) eines Absorbers haben.

4. Sonnenkollektor nach einem der Ansprüche 1 bis 3, dadurch gekennzeichnet, dass die Spitze jedes vorspringenden Dieders des Reflektors in einem Abstand von der Mitte des zugeordneten rohrförmigen Absorbers (9) liegt, der etwa gleich dem doppelten Radius des Absorbers ist.

5. Sonnenkollektor nach einem der Ansprüche 1 bis 4, dadurch gekennzeichnet, dass jede winkelförmige Seite einen Öffnungswinkel von 46°54′ hat und dass seine Halbierungsebene unter einem Winkel von 60° zur Vertikalen geneigt ist.

Fig. 1

Fig.2

0 090 902

Fig.3